# EUROPEAN PATENT SPECIFICATION

(11) **EP 0 372 659 B1**
(45) Date of publication and mention of the grant of the patent: **17.03.1993**
(21) Application number: 89203104.8
(22) Date of filing: 07.12.1989
(51) Int. Cl.: A01K 1/01

(54) **Cat litter**
Katzenabort
Boîte à litière pour chats

(30) Priority: 09.12.1988 NL 8803021
(43) Date of publication of application: 13.06.1990
(73) Proprietor: Goemans, Pieter Willem, NL-1186 SC Amstelveen (NL)
(72) Inventor: Goemans, Pieter Willem, NL-1186 SC Amstelveen (NL)
(74) Representative: Voncken, Bartholomeus Maria Christiaan

(56) References cited:
- FR-A- 2 413 873
- US-A- 4 352 340
- US-A- 4 760 816
- US-A- 4 788 935

## Description

The invention relates to a cat litter device according to the preamble of claim 1.

Known cat litter devices have several disadvantages. Most litter devices are not higher than about 10 cm; when the cat "digs" often part of the contenance (cat litter pellets and/or excrements) are deposited beside the litter device. Sometimes a tom-cat wants to urinate inclined upwardly (this behaviour is called "setting scent-flags"), as will pussy-cats sometimes.

It is experienced that a litter device has to be at least 35 cm of height. Indeed lower litter devices exist with a sufficient high loose cover, but cleaning the lower litter device section and upper litter device section remains an unpleasant job. Indeed plastic cat litter devices are available but a digging cat destroys these quickly by scratching with all unpleasant consequences. Moreover a cat litter device obtains after a short while a penetrant unpleasant smell, even if cleaned regularly, whereas moreover the litter device can contain many, far from innocent, micro-organisms (such as the toxoplasmosis-virus).

US-A-4.352.340 SHOWS a cat litter device comprising a box and a bag placed inside the box. The box and bag are provided with corresponding cat access openings.

Via the box opening and the joining opening in the bag a cat can enter the cat litter device and relieve itself there. The bag protects the box in an effective way against the excrements of the cat and for cleaning the cat litter device the bag can easily be removed from the box and be thrown away together with the contenance. However, the risk occurs that a cat destroys the bottom of the bag by scratching after having relieved itself.

Thus, according to the invention on top of the bottom of the bag there is positioned a sheet-like piece, such as of card-board, plastics material or the like, having a circumferential shape that substantially corresponds with the internal shape of the box. Such a sheet-like piece, onto which cat litter pellets can be applied, offers a very reliable protection against damaging the bag by sharp cat nails.

Further it is advantageous if the cat litter device further comprises a second bag provided around the outer side of the box closing the top thereof and with an opening that also joins the box opening. Thus also the opening at the top of the box is effectively closed.

A bag, as of plastics material or the like, to be applied in a cat litter device according to the invention comprises a tearing perforation shaped in correspondence with the shape of the box opening to be formed.

In a method for the production of a bag according to the invention a tube of bag material is flattened while forming at least one side-inlay, whereafter at the side-inlay a C-shaped perforation is provided completely penetrating the material package, wherein both legs of the C-shaped perforation are directed inwardly and extend at least until at the innermost side-inlay edge and wherein transversely to the tube welding seams are provided and wherein the tube is cut near to the welding seams for forming the individual bags. Because the tube of bag material is flattened while forming at least one side-inlay it is possible to provide the tearing perforation, which is meant for forming the opening in the bag, by a simple punching operation.

Next the invention will be elucidated by means of the drawing in which an embodiment of the cat litter device according to the invention is illustrated.
Fig. 1 shows the assembly parts of a cat litter device according to the invention;
Fig. 2 shows an assembled cat litter device according to fig. 1 previously to the application of an additional bag;
Fig. 3 shows a plano for the formation of a box of the cat litter device according to fig. 1 or fig. 2, and
fig. 4 shows a part of the formation of a bag of the cat litter device according to fig. 1 or fig. 2.

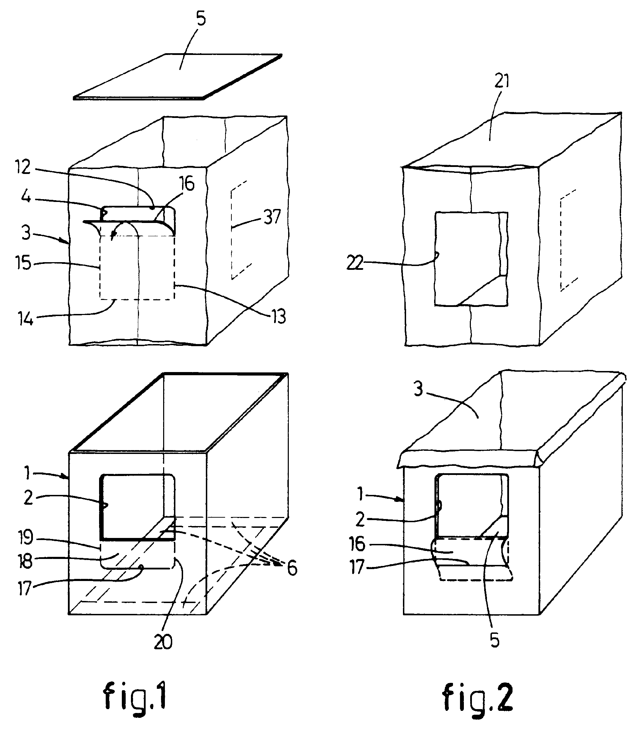

In fig. 1 the following parts of the cat litter device are visible: a box 1, provided in one of its side walls with an opening 2 and open at its top; a bag 3 of plastics material or the like which has to be positioned at the inner side of the box 1 and having an opening 4 that, if the bag is provided in the box 1, joins the box opening 2; and a sheet-like piece 5, such as of card-board, plastics material or the like, to be positioned in the bag 3 on top of the bottom thereof, having a circumferential shape that substantially corresponds with the internal shape of the box 1.

In the embodiment shown in fig. 1 the box 1 is at its lower side partially open too. The partial bottom of the box 1 here comprises overlappingly inwardly bent material strips 6 joining the box side walls. Ofcourse it is possible that these material strips 6 are dimensioned such that, in the assembled position, they form a fully closed bottom of the box 1 according to fig. 1.

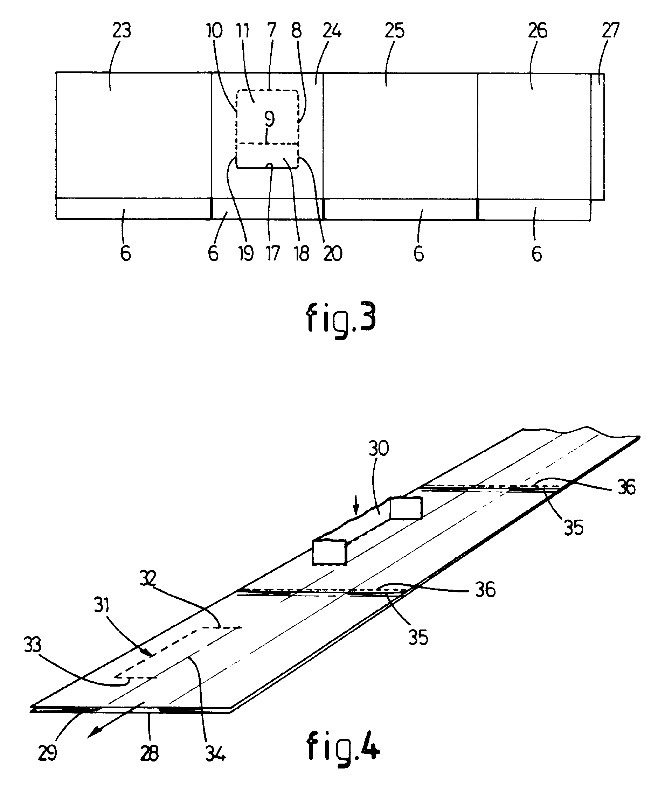

The opening 2 of the box 1 is formed by tearing off or correspondingly removing a respective material section 11 along corresponding perforations 7 until 10 (see fig. 3).

The bag 3, in the shown embodiment for example made of plastics material, also comprises perforations 12 until 15. Along the perforations 12, 13 and 15 a strip-like material section 16 is downwardly torn off from the bag 3, which material section 16 remains connected with the bag 3 only at the perforation 14.

Finally it is noted that in preparation to the application of the bag 3 into the box 1 below the opening 2 in this box 1 an additional perforation 17 is provided which will be opened for the formation of a horizontal slit. The material section 18 remains connected with the box 1 at the perforations 19 and 20.

Now the bag 3 can be applied into the box 1. Doing this the upper edges of the bag 3 are bent around the upper edges of the box 1, as shown in fig. 2. The partially torn off material section 16 of the bag 3 is guided outwardly through the opening 2 of the box 1, directed downwardly and then again inserted into the box 1 through the slit formed at the perforation 17. This position is shown in fig. 2. Like this the bag 3 is positively connected with the box 1 at the opening 2, such that a cat entering the box 1 cannot get entangled between the box 1 and the bag 3. Next the sheet-like piece 5 is carefully positioned into the bag 3 until this sheet-like piece pushes the bag 3 with its bottom against the bottom of the material strips 6 forming the box 1. Finally cat litter pellets or the like are applied onto the sheet-like piece 5 after which the cat litter is ready for use.

Further in fig. 2 an additional bag 21 is shown which fully corresponds with bag 3, but in which the material section 16 is completely torn off from the bag. Moreover the bag 1 is in a reversed position relative to bag 3, in which position its bottom is at its top. The bag 21 can now be slided along the outer side of the combination of box 1 and bag 3 whereby the opening 22 of bag 21 will join the opening 2 of box 1. As a result the completed cat litter device can be effectively closed at its top too.

If the cat litter device is meant for small cats it can be advantageous if the material section 18 is completely loosened from the box 1. Like this a larger opening 2 is obtained with an lower edge at a lower height.

Fig. 3 shows a plano for the formation of the box 1. Visible are side walls 23 until 26 of the box, a connecting section 27 that for the formation of the box is connected with side wall 23 and material strips 6 which, correctly assembled, will form the bottom of the box 1. Further several perforations in the side wall 24 are visible which are meant for the formation of the opening 2 and possibly slit 17.

Finally fig. 4 shows the way in which the perforations 12 until 15 can be made in the bag 3. Starting point is a tube 28 of bag material which is flattened while forming at least one side-inlay 29 (two in the shown embodiment). At the side-inlay 29 a C-shaped perforation 31, that entirely penetrates the material package, is provided by means of a punching means 30, whereby the two legs 32 and 33 of this C-shaped perforation are directed inwardly and extend at least until at the innermost side-inlay edge 34. Next transversely to the tube 28 welding seams 35 are provided whereafter the tube 28 is cut (cuts 36) at the welding seams 35 for forming the individual bags.

In the extended position of the bag 3 the C-shaped perforation provided by means of the punching means 30 leads to perforations 12 until 15. Further C-shaped perforations 37 are present in the side walls of the bag 3, these perforations however not being used while using the bag 3 and being such that they do not have a negative influence on the function of the bag.

The use of the cat litter device according to the invention is extremely simple. Providing a bag 3 in the box 1 can be carried out quickly, while as an extra safety also bag 21 can be applied over the cat litter device formed like this. Cleaning the cat litter device is carried out in a simple way by removing the bag 3 together with its contenance and the sheet-like piece 5 (and possibly with bag 21) from the box 1 and throwing it away. Hereby the total contenance of the cat litter device is removed from the box 1 without contacting this contenance; the box 1 can be used again while applying at least one new bag. As a result the hygienics of the cat litter device is essentially improved.

Moreover this provides a cheap solution for obtaining a hygienic cat litter device. Due to its shape the bags 3 can be produced in a simple and cheap way such that their costs will be low.

The invention is not restricted to the embodiment described before.

## Claims

1. Cat litter device, comprising a box (1) open at its top and with an opening (2) in one of its side walls, wherein at the inner side of the box a bag (3) of plastics material or the like is provided having an opening (4) joining the box opening (2), characterized in that on top of the bottom of the bag (3) there is positioned a sheet-like piece (5), such as of card-board, plastics material or the like, having a circumferential shape that substantially corresponds with the internal shape of the box (1).

2. Cat litter device according to claim 1, characterized in that joining the lower edge of the bag opening (4) there is a strip-like material portion (16) extending outwardly through the box opening (2) and further inwardly along the corresponding side wall of the box.

3. Cat litter device according to claim 2, characterized in that in the respective side wall at some distance below the lower edge of the box opening (2), there is provided a horizontal slit (17) in the box (1) for passing through the strip-like material portion (16) of the bag.

4. Cat litter device according to claim 3, characterized in that between the ends of the slit (17) and the ends of the lower edge of the box opening (2) the box (1) is provided with perforations (19,20).

5. Cat litter device according to one of the claims 1-4, characterized in that it further comprises a second bag (21) provided around the outer side of the box (1) closing the top thereof and with an opening (22) that also joins the box opening (2).

6. Cat litter device according to one of the claims 1-5, characterized in that the bottom of the box comprises overlappingly inwardly bent material strips (6) joining the box side walls.

## Patentansprüche

1. Ausmistbarer Katzenkäfig mit einem Kasten, welcher oben geöffnet ist und mit einer Öffnung (2) in einer seiner Seitenwände versehen ist, wobei auf der Innenseite des Kastens eine Tüte (3) aus Kunststoffmaterial oder ähnlichem angeordnet ist, welche mit einer Öffnung (4) versehen ist, welche mit der Öffnung (2) des Kastens verbunden ist, dadurch gekennzeichnet, daß oben auf dem Boden der Tüte (3) ein dünnes, plattenförmiges Teil (5) angeordnet ist, beispielsweise aus Karton oder einem Kunststoffmaterial oder ähnlichem, dessen Umfangskontur der Innenkontur des Kastens (1) entspricht.

2. Ausmistbarer Katzenkäfig nach Anspruch 1, dadurch gekennzeichnet, daß sich an die Unterkante der in der Tüte ausgebildeten Öffnung (4) ein streifenförmiger Materialteil (16) anschließt, welcher sich durch die in dem Kasten ausgebildete Öffnung (2) hindurch und weiter einwärts entlang der entsprechenden Seitenwand des Kastens erstreckt.

3. Ausmistbarer Katzenkäfig nach Anspruch 2, dadurch gekennzeichnet, daß in der jeweiligen Seitenwand in einiger Entfernung unter der Unterkante der in dem Kasten ausgebildeten Öffnung (2) ein horizontaler Schlitz (17) in dem Kasten (1) ausgebildet ist, um durch diesen den streifenförmigen Materialteil (16) stecken zu können.

4. Ausmistbarer Katzenkäfig nach Anspruch 3, dadurch gekennzeichnet, daß zwischen den Enden des Schlitzes (17) und den Enden der Unterkante der in dem Kasten ausgebildeten Öffnung (2) der Kasten (1) mit Perforationen (19,20) versehen ist.

5. Ausmistbarer Katzenkäfig nach einem der Ansprüche 1 bis 4, dadurch gekennzeichnet, daß darüberhinaus eine zweite Tüte (21) um die Außenseite des Kastens (1) herum vorgesehen ist, welche die Oberseite davon verschließt und mit einer Öffnung (22) versehen ist, welche ebenfalls mit der in dem Kasten ausgebildeten Öffnung (2) verbunden ist.

6. Ausmistbarer Katzenkäfig nach einem der Ansprüche 1 bis 5, dadurch gekennzeichnet, daß der Boden des Kastens überlappende und einwärts geknickte Materialstreifen (6) aufweist, welche mit der Seitenwänden des Kastens verbunden sind.

## Revendications

1. Dispositif formant litière pour chat, comprenant une boîte (1) ouverte à sa partie supérieure et comportant une ouverture (2) ménagée dans l'une de ses parois latérales, et dans lequel il est prévu, sur le côté intérieur de la boîte, un sac (3) en matière plastique ou analogue, qui comporte une ouverture (4) se raccordant à l'ouverture (2) de la boîte, caractérisé en ce que sur la face supérieure de la partie inférieure du sac (3) est disposé un élément en forme de feuille (5), par exemple un carton, une matière plastique ou analogue, qui possède une forme circonférentielle correspondant essentiellement à la forme intérieure de la boîte (1).

2. Dispositif formant litière pour chat selon la revendication 1, caractérisé en ce qu'un élément de matière en forme de bande (16), qui s'étend à l'extérieur à travers l'ouverture (2) de la boîte et en outre à l'intérieur le long de la paroi latérale correspondante de la boîte, est prévu de manière à se raccorder au bord inférieur de l'ouverture (4) du sac.

3. Dispositif formant litière pour chat selon la revendication 2, caractérisé en ce que dans la paroi latérale respective et à une certaine distance au-dessous du bord inférieur de l'ouverture (2) de la boîte, il est prévu, dans la boîte (1), une fente horizontale (17) pour le passage de la partie de matière en forme de bande (16) du sac.

4. Dispositif formant litière pour chat selon la revendication 3, caractérisé en ce qu'entre les extrémités de la fente (17) et les extrémités du bord inférieur de l'ouverture (2) de la boîte, la boîte (1) comporte des perforations (19, 20).

5. Dispositif formant litière pour chat selon l'une des revendications 1-4, caractérisé en ce qu'il comporte en outre un second sac (21) disposé autour de la surface extérieure de la boîte (1) de manière à fermer la partie supérieure de cette boîte, et une ouverture (22) qui se raccorde également à l'ouverture (2) de la boîte.

6. Dispositif formant litière pour chat selon l'une des revendications 1-5, caractérisé en ce que la partie inférieure de la boîte comprend des bandes de matière (6) repliées vers l'intérieur en chevauchement, qui se raccordent aux parois latérales de la boîte.
